(19) Europäisches Patentamt
European Patent Office
Office européen des brevets

(11) **EP 4 768 617 A1**

(12) **EUROPEAN PATENT APPLICATION**
published in accordance with Art. 153(4) EPC

(43) Date of publication:
**01.07.2026 Bulletin 2026/27**

(21) Application number: **24879588.2**

(22) Date of filing: **03.10.2024**

(51) International Patent Classification (IPC):
*C22C 38/00* (2006.01)    *C21D 8/10* (2006.01)
*C22C 38/44* (2006.01)    *C22C 38/54* (2006.01)

(52) Cooperative Patent Classification (CPC):
**C21D 8/10; C22C 38/00; C22C 38/44; C22C 38/54**

(86) International application number:
**PCT/JP2024/035528**

(87) International publication number:
**WO 2025/084162 (24.04.2025 Gazette 2025/17)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **16.10.2023 JP 2023177996**

(71) Applicant: **JFE Steel Corporation
Tokyo 100-0011 (JP)**

(72) Inventors:
• **MATSUMOTO Atsushi
Tokyo 100-0011 (JP)**
• **KATSUMURA Tatsuro
Tokyo 100-0011 (JP)**

(74) Representative: **Haseltine Lake Kempner LLP
One Portwall Square
Portwall Lane
Bristol BS1 6BH (GB)**

(54) **ELECTRIC RESISTANCE WELDED STEEL PIPE AND METHOD FOR MANUFACTURING SAME**

(57) Objects of the present invention are to provide an electric resistance welded steel pipe having excellent weld quality and to provide a method for manufacturing the same.

An electric resistance welded steel pipe including a base metal and an electric resistance weld, the base metal having a chemical composition containing, in mass%, C: 0.10 to 0.50%, Si: 0.15 to 0.35%, Mn: 0.60 to 0.90%, Al: 0.001 to 0.1%, P: 0.03% or less, S: 0.03% or less, Cr: 0.90 to 1.20%, Mo: 0.15 to 0.30%, and Ni: 0.25% or less, with the balance being Fe and unavoidable impurities, wherein the chemical composition has a Mn/(Si+Cr) of 0.52 or greater and 0.85 or less, and, in a flattening test of the electric resistance welded steel pipe, inequality (1), shown below, is satisfied:

$$h/D \leq 0.5 \qquad (1)$$

where h is a flattening crack height (mm), at which an initial crack is observed in the electric resistance weld, and D is an outside diameter (mm) of the steel pipe.

FIG. 1

EP 4 768 617 A1

**Description**

Technical Field

The present invention relates to an electric resistance welded steel pipe for use in mechanical structures and the like and to a method for manufacturing the electric resistance welded steel pipe.

Background Art

In mechanical structures such as automobiles, parts made of a steel bar, which is solid, are increasingly being replaced by those made of a hollow material, such as a steel pipe. This is to address environmental conservation by, for example, reducing the total weight to improve fuel efficiency. In the case where a steel pipe is used as an axial element of a rotational body, such as a shaft, the properties of the steel pipe are required to include not only a strength of the material but also a high cross-sectional dimensional accuracy, such as a uniform wall thickness of the steel pipe in a circumferential direction, which is necessary to minimize vibration during rotation.

Steel pipes for use in mechanical structures are generally classified into welded steel pipes, which include a weld, and seamless steel pipes, which do not include a weld. Among welded steel pipes, electric resistance welded steel pipes have an excellent cross-sectional dimensional accuracy, but they are required to have a guaranteed weld quality for the components in which the steel pipes are used. On the other hand, seamless steel pipes need not have a guaranteed weld quality, but they have a problem of eccentricity between inside and outside diameters and a problem with a cross-sectional dimension, that is, a nonuniform wall thickness in cross section in the circumferential direction. Accordingly, in terms of cross-sectional dimensional accuracy, electric resistance welded steel pipes are advantageous for use as axial elements of rotational structures. Regarding the use of an electric resistance welded steel pipe, excellent weld quality is desired in order to avoid a problem of a fracture of the weld during the use of a rotational machine. Furthermore, in the case where an electric resistance welded steel pipe is used as a rotational shaft, it is necessary that a surface of the steel pipe have reduced wear, and, therefore, a high surface hardness is also a required component property. Furthermore, in the case of a hollow material such as a steel pipe, it is also required that a deviation in the material properties in a cross section be small. In the case of common carbon steels, it has been difficult to obtain a steel pipe in which both inner and outer surfaces of the pipe have high hardness. This is because, in the case of steel pipes having a long length, it is difficult to employ forced cooling, such as water quenching, for their inner surfaces. One approach for producing a steel pipe in which both the inner and outer surfaces of the pipe have sufficient hardness, even in a case where natural cooling is used, is to include alloying elements, such as Cr and Mo, in the material of the steel pipe to improve the hardenability of the steel material. However, since Cr has a high affinity for oxygen, and an oxide thereof has a higher melting point than the steel material, if the amount of Cr included is increased, the amount of a high-melting-point Cr-based oxide formed on the joining surfaces during electric resistance welding increases, which results in an increased amount of such an oxide remaining within the weld, and, as a result, the quality of the weld is significantly degraded. Accordingly, in the case where an electric resistance welded steel pipe is manufactured from a Cr-containing steel material, it is necessary to inhibit the high-melting-point Cr-based oxide from being formed during electric resistance welding or to make an adjustment to the chemical composition of the steel material such that the discharge of the molten steel that is discharged together with the Cr-based oxide is promoted.

Patent Literature 1 proposes an electric resistance welded steel pipe in which a decarburized layer on a surface has a reduced size; this is achieved by using a material in which Sn is included, in addition to Cr included in an amount of 0.01 to 0.50% in mass%.

Patent Literature 2 proposes an electric resistance welded steel pipe; in this steel pipe, Cr is included in an amount of 1.00% or less in mass%, and the difference in hardness between a surface layer and a wall-thickness-wise middle position in a base metal zone of the steel pipe is small.

Patent Literature 3 proposes an electric resistance welded boiler steel pipe in which a (Si%)/(Mn%+Cr%) is 0.005 or greater and 1.5 or less and which has a melting point of a mixed oxide of 1600°C or less, the mixed oxide being that formed during electric resistance welding and formed of $SiO_2$, $MnO$, and $Cr_2O_3$.

Citation List

Patent Literature

PTL 1: International Publication No. 2020/230795
PTL 2: International Publication No. 2018/011862

PTL 3: Japanese Unexamined Patent Application Publication No. 2006-77330

Summary of Invention

Technical Problem

In the cases of Patent Literature 1 and 2, the amount of Cr included is 1% or less, and there is no reference to the quality of the electric resistance weld. Accordingly, in a case where Cr is added, a need arises to design the components of the steel material in consideration of the quality of the electric resistance weld. In Patent Literature 3, there is a reference to adjusting the contents of Si, Mn, and Cr in the steel material; however, a problem exists in that since the content of C is 0.2% or less in mass%, the composition, in some cases, may not provide sufficient hardness of the surface of the steel pipe for applications in mechanical structures.

The present invention has been made in view of the above circumstances, and objects of the present invention are to provide an electric resistance welded steel pipe having excellent weld quality and to provide a method for manufacturing the same. As used herein, the expression "excellent weld quality" refers to cases where a ratio h/D is 0.5 or less, where h is a flattening crack height determined by a flattening test performed on a steel pipe, and D is an outside diameter of the steel pipe.

Solution to Problem

To achieve the objects described above, the present inventors diligently conducted studies regarding various factors that might affect the quality of the electric resistance weld of an electric resistance welded steel pipe that was produced from a Cr- and Mo-containing base metal (steel material). As a result, the following discovery was made. Note that the term "base metal" refers to the material of the electric resistance welded steel pipe excluding the weld, and that the term "steel material" refers to a steel strip before being formed into an electric resistance welded steel pipe.

In an electric resistance weld resulting from electric resistance welding of the base metal, an oxide that was formed at an end surface of the joint had a composition mainly including Mn, Si, and Cr. Variations in viscosity and the melting point of the oxide were observed, depending on a Mn/Si, which is a ratio between the components Mn and Si in the base metal. When the Mn/Si was high, the Mn concentration in the oxide was increased, therefore, the melting point of the oxide exceeded the melting point of the base metal, and as a result, the oxide tended to remain in the weld. When the Mn/Si was low, the Si concentration in the oxide was increased, and in a case where the melting point of the oxide exceeded the melting point of the base metal as in the above case, the oxide tended to remain in the weld. The reason that an oxide tends to remain in the weld when the melting point of the oxide is higher than the melting point of the base metal is that as the melting point of the oxide increases compared to the melting point of the base metal, a viscosity of the oxide increases during the electric resistance welding, which results in a decrease in the fluidity of the oxide that is discharged to the outside from the weld, together with the molten steel. The same applies to Cr. If the Cr concentration in the oxide is increased, the oxide constitutes a high-melting-point Cr-based oxide that has an increased melting point. To ensure sufficient fluidity to allow the oxide to be discharged to the outside during electric resistance welding as described above, it is necessary to control Mn, Si, and Cr in the composition of the oxide, and adjusting the components of the base metal can inhibit the formation of oxides that impair the weld quality. This is the discovery that was made.

The present invention is based on this discovery, and a summary of the present invention is as follows.

[1] An electric resistance welded steel pipe which includes a base metal and an electric resistance weld, the base metal having a chemical composition containing, in mass%,

C: 0.10 to 0.50%,
Si: 0.15 to 0.35%,
Mn: 0.60 to 0.90%,
Al: 0.001 to 0.1%,
P: 0.03% or less,
S: 0.03% or less,
Cr: 0.90 to 1.20%,
Mo: 0.15 to 0.30%, and
Ni: 0.25% or less, with the balance being Fe and unavoidable impurities, wherein
the chemical composition has a Mn/(Si+Cr) of 0.52 or greater and 0.85 or less, and
in a flattening test of the electric resistance welded steel pipe, inequality (1), shown below, is satisfied:

$$h/D \leq 0.5 \qquad (1)$$

where h is a flattening crack height (mm), at which an initial crack is observed in the electric resistance weld, and D is an outside diameter (mm) of the steel pipe.

[2] The electric resistance welded steel pipe according to [1], wherein the chemical composition further contains, in mass%, one or more selected from

> Cu: 0.5% or less,
> Ti: 0.05% or less,
> Nb: 0.005% or less,
> V: 0.005% or less,
> B: 0.001% or less, and
> Ca: 0.001% or less.

[3] The electric resistance welded steel pipe according to [1] or [2], wherein, in the base metal of the electric resistance welded steel pipe, a hardness at a position 0.2 mm ± 0.05 mm from an outer surface of the steel pipe in a wall thickness direction and a hardness at a position 0.2 mm ± 0.05 mm from an inner surface of the steel pipe in the wall thickness direction are each 300 HV or greater, and a difference between the hardness at the position 0.2 mm ± 0.05 mm from the outer surface of the steel pipe in the wall thickness direction and the hardness at the position 0.2 mm ± 0.05 mm from the inner surface of the steel pipe in the wall thickness direction is 100 HV or less.

[4] The electric resistance welded steel pipe according to any one of [1] to [3], wherein, in a C cross section of the electric resistance welded steel pipe, a difference between a maximum wall thickness and a minimum wall thickness of the steel pipe is 10% or less of an average wall thickness of the steel pipe, where the C cross section is a plane parallel to a circumferential direction and a wall thickness direction of the steel pipe.

[5] A method for manufacturing the electric resistance welded steel pipe according to any one of [1] to [4], the method includes performing heating at a heating rate of 120°C/s or less and at a heating temperature of 850°C or greater and 1200°C or less and subsequently performing a diameter reduction rolling.

[6] The method for manufacturing the electric resistance welded steel pipe according to [5], wherein the heating rate is 20°C/s or greater, and an average cooling rate for cooling performed after the diameter reduction rolling is 3°C/s or greater.

[7] The method for manufacturing the electric resistance welded steel pipe according to [5] or [6], wherein the heating temperature is 1100°C or less, and a diameter reduction ratio for the diameter reduction rolling is 25 to 75%.

Advantageous Effects of Invention

The present invention enables the manufacture of an electric resistance welded steel pipe having excellent quality of the electric resistance weld even when the steel pipe has a composition containing Cr.

Brief Description of Drawings

[Fig. 1] Fig. 1 is a diagram illustrating how a flattening test is performed.

[Fig. 2] Fig. 2 is a diagram illustrating, regarding a steel material having a Cr content of 1%, a relationship between a flattening crack height/an outside diameter of an electric resistance welded steel pipe, which is an index of a flattening property of the weld of the electric resistance welded steel pipe, and a Mn/Si of the steel material.

[Fig. 3] Fig. 3 is a diagram illustrating a relationship between a ratio of a Mn/(Si+Cr) of the composition of a steel material and a Cr concentration in an oxide remaining in an electric resistance weld.

Description of Embodiments

First, a composition of a steel material (base metal of an electric resistance welded steel pipe) of the present invention will be described below. "Mass%" is simply denoted as "%" unless otherwise specified.

C: 0.10 to 0.50%

C is an element that forms hard phases, such as pearlite, cementite, and martensite, thereby increasing the strength and hardness of a steel material. C needs to be included in an amount of 0.10% or greater to obtain a desired hardness for uses in mechanical structures. Accordingly, a C content is to be 0.10% or greater. The C content is preferably 0.15% or greater and more preferably 0.18% or greater. The C content is even more preferably 0.22% or greater and most preferably 0.25% or greater. If the C content is greater than 0.50%, the viscosity of molten steel increases, and, consequently, the fluidity of the molten steel, which is the medium through which an oxide is expended during electric resistance welding, decreases. Accordingly, the C content is to be 0.50% or less. The C content is preferably 0.45% or less and more preferably 0.43% or less. The C content is even more preferably 0.40% or less and most preferably 0.35% or less.

Si: 0.15 to 0.35%

Si is an element that increases the strength of the base metal through solid solution strengthening; however, Si has a strong affinity for oxygen and forms a high-melting-point oxide. If Si is present in an amount greater than 0.35%, the melting point of the oxide exceeds the melting point of the base metal, and, consequently, the oxide tends to remain in the electric resistance weld. Accordingly, a Si content is to be 0.35% or less. The Si content is preferably 0.32% or less and more preferably 0.30% or less. The Si content is even more preferably 0.28% or less and most preferably 0.26% or less. If Si is present in an amount less than 0.15%, a Mn concentration in the oxide is increased, and, therefore, the melting point of the oxide exceeds the melting point of the base metal; consequently, the oxide tends to remain in the electric resistance weld, and in addition, a desired strength of the steel material cannot be obtained. Accordingly, the Si content is to be 0.15% or greater. The Si content is preferably 0.18% or greater and more preferably 0.20% or greater. The Si content is even more preferably 0.22% or greater and most preferably 0.24% or greater.

Mn: 0.60 to 0.90%

Mn is an element that increases the strength of the base metal through solid solution strengthening; however, an oxide of Mn has a high melting point. If Mn is present in an amount greater than 0.90%, the melting point of the oxide exceeds the melting point of the base metal, and, consequently, the oxide tends to remain in the electric resistance weld. Accordingly, a Mn content is to be 0.90% or less. The Mn content is preferably 0.85% or less and more preferably 0.80% or less. The Mn content is even more preferably 0.78% or less and most preferably 0.76% or less. If Mn is present in an amount of less than 0.60%, a desired increase in the strength of the base metal cannot be achieved by solid solution strengthening. Accordingly, the Mn content is to be 0.60% or greater. The Mn content is preferably 0.70% or greater. The Mn content is more preferably 0.72% or greater and most preferably 0.74% or greater.

Al: 0.001 to 0.1%

Al is an element that acts as a deoxidizing agent. Producing this effect requires the presence of Al in an amount of 0.001% or greater. Accordingly, an Al content is to be 0.001% or greater. The Al content is preferably 0.005% or greater. The Al content is more preferably 0.01% or greater and even more preferably 0.012% or greater. On the other hand, if the Al content is greater than 0.1%, the amount of alumina-based inclusions formed increases, which degrades surface properties. Accordingly, the Al content is 0.1% or less. The Al content is preferably 0.05% or less. The Al content is more preferably 0.04% or less and even more preferably 0.03% or less.

P: 0.03% or less

P is an element that increases the strength of the base metal through solid solution strengthening; however, P tends to segregate at grain boundaries of microstructures and, therefore, reduces the toughness of the base metal. If P is present in an amount greater than 0.03%, grain boundary segregation becomes significant, which results in a significant degradation in toughness. Accordingly, a P content is to be 0.03% or less. The P content is preferably 0.02% or less. The P content is more preferably 0.018% or less and even more preferably 0.016% or less. The P content is most preferably 0.01% or less. While the lower limit is not particularly limited, the P content is preferably 0.005% or greater and more preferably 0.007% or greater.

S: 0.03% or less

S is an element that improves machinability if present as MnS in the base metal; however, similar to P, S tends to segregate at grain boundaries of microstructures and, therefore, reduces the toughness of the base metal. If S is present in an amount greater than 0.03%, grain boundary segregation becomes significant, which results in a significant degradation in toughness. Accordingly, a S content is 0.03% or less. The S content is preferably 0.02% or less. The S content is more preferably 0.018% or less and even more preferably 0.016% or less. The S content is most preferably 0.01% or less. While the lower limit is not particularly limited, the S content is preferably 0.0005% or greater and more preferably 0.001% or greater.

Cr: 0.90 to 1.20%

Cr is an element that contributes to increasing the strength of the base metal and the hardness of a surface of the base metal by improving the hardenability and temper softening resistance of the base metal. However, Cr has a strong affinity for oxygen and forms a high-melting-point oxide. If Cr is present in an amount less than 0.90%, improvement in hardenability and temper softening resistance cannot be effectively achieved, which makes it impossible to obtain a desired hardness of the surface of the base metal. Accordingly, a Cr content is to be 0.90% or greater. The Cr content is preferably 0.92% or greater and more preferably 0.95% or greater. The Cr content is even more preferably 0.97% or greater. If the Cr content is greater than 1.20%, the melting point of the oxide exceeds the melting point of the base metal, and, consequently, the oxide tends to remain in the electric resistance weld. Accordingly, the Cr content is to be 1.20% or less. The Cr content is preferably 1.10% or less and more preferably 1.05% or less. The Cr content is even more preferably 1.02% or less, most preferably 1.00% or less, and even most preferably 0.98% or less.

Mo: 0.15 to 0.30%

Similar to Cr, Mo is an element that contributes to increasing the strength of the base metal and the hardness of the surface of the base metal by improving the hardenability and temper softening resistance of the base metal. Producing this effect requires the presence of Mo in an amount of 0.15% or greater. Accordingly, a Mo content is to be 0.15% or greater. The Mo content is preferably 0.18% or greater. The Mo content is more preferably 0.20% or greater and even more preferably 0.22% or greater. If the Mo content is greater than 0.30%, its effect on the increase in the strength of the base metal and the hardness of the surface of the base metal becomes less significant, with the result being increased material cost. Accordingly, the Mo content is to be 0.30% or less. The Mo content is preferably 0.27% or less. The Mo content is more preferably 0.25% or less and even more preferably 0.24% or less.

Ni: 0.25% or less

Ni is an element that contributes to improving the hardenability and toughness of the base metal. If Ni is present in an amount greater than 0.25%, the effect no longer increases, and the material cost increases. Accordingly, a Ni content is to be 0.25% or less. The Ni content is preferably 0.20% or less. The Ni content is more preferably 0.17% or less and even more preferably 0.15% or less. While the lower limit of the Ni content is not particularly specified, the Ni content is preferably 0.03% or greater so that the effect of the presence of Ni can be produced. The Ni content is more preferably 0.10% or greater.

In other embodiments of the present invention, the chemical composition may optionally further contain one or more selected from Cu, Ti, Nb, V, B, and Ca in amounts described below.

Cu: 0.5% or less

Cu is an element that increases the strength of the base metal by improving its hardenability. However, if Cu is present in an excessive amount, defects are likely to be formed in the surface of the base metal. Accordingly, in the case where Cu is included, a Cu content is to be 0.5% or less. The Cu content is preferably 0.3% or less. The Cu content is more preferably 0.2% or less. The Cu content is even more preferably 0.15% or less. While the lower limit of the Cu content is not particularly specified, the content is preferably 0.005% or greater so that the effect of the presence of Cu can be produced. The Cu content is more preferably 0.01% or greater.

Ti: 0.05% or less

Ti is an element that increases the strength of the base metal (steel material) by causing fine carbides or nitrides to precipitate. However, if Ti is present in an excessive amount, precipitates become coarse, which reduces the toughness of the base metal. Accordingly, in the case where Ti is included, a Ti content is to be 0.05% or less. The Ti content is preferably 0.03% or less. The Ti content is more preferably 0.02% or less and even more preferably 0.018% or less. While the lower limit of the Ti content is not particularly specified, the content is preferably 0.002% or greater so that the effect of the presence of Ti can be produced. The Ti content is more preferably 0.01% or greater.

Nb: 0.005% or less

Nb is an element that increases the strength of the base metal by causing fine carbides or nitrides to precipitate. However, if Nb is present in an amount greater than 0.005%, the effect of increasing the strength no longer increases, and an economic disadvantage is caused. Accordingly, in the case where Nb is included, a Nb content is to be 0.005% or less. The Nb content is preferably 0.004% or less. The Nb content is more preferably 0.003% or less and even more preferably 0.002% or less. While the lower limit of the Nb content is not particularly specified, the content is preferably 0.001% or greater so that the effect of the presence of Nb can be produced.

V: 0.005% or less

V is an element that increases the strength of the base metal by causing fine carbides or nitrides to precipitate. However, if V is present in an amount greater than 0.005%, the effect of increasing the strength no longer increases, and an economic disadvantage is caused. Accordingly, in the case where V is included, a V content is to be 0.005% or less. The V content is preferably 0.004% or less. The V content is more preferably 0.003% or less and even more preferably 0.002% or less. While the lower limit of the V content is not particularly specified, the V content is preferably 0.001% or greater so that the effect of the presence of V can be produced. The V content is more preferably 0.0015% or greater.

B: 0.001% or less

B is an element that can improve the hardenability of the base metal even when the amount of B included is small. However, if B is present in an amount greater than 0.001%, the effect of improving the hardenability no longer increases, and an economic disadvantage is caused. Accordingly, in the case where B is included, a B content is to be 0.001% or less. The B content is preferably 0.0008% or less. The B content is more preferably 0.0006% or less and even more preferably 0.0004% or less. While the lower limit of the B content is not particularly specified, the content is preferably 0.0001% or greater so that the effect of the presence of B can be produced. The B content is more preferably 0.0002% or greater.

Ca: 0.001% or less

Ca is an element that acts to control sulfide-based inclusions such that the inclusions are in the form of fine spheres. The controlling of sulfide-based inclusions such that they have a spherical shape can reduce the degree of stress concentration around the sulfide-based-inclusions and, consequently, leads to a reduction in the origins of cracks associated with a forming operation and the origins of cracks associated with fatigue failure. However, if Ca is present in an excessive amount, sulfide-based inclusions increase, which reduces the cleanliness of the base metal and the weld quality. Accordingly, in the case where Ca is included, a Ca content is to be 0.001% or less. The Ca content is preferably 0.0006% or less. The Ca content is more preferably 0.0005% or less and even more preferably 0.0004% or less. While the lower limit of the Ca content is not particularly specified, the content is preferably 0.0002% or greater so that the effect of the presence of Ca can be produced. The Ca content is more preferably 0.0003% or greater.

The balance is Fe and unavoidable impurities. The steel material according to an embodiment of the present invention may include only the basic components described above and the balance, with the balance being Fe and unavoidable impurities. Examples of the unavoidable impurities include the above-described components, if the components are present in amounts less than the lower limits.

An electric resistance welded steel pipe of the present invention includes the base metal and the electric resistance weld. The base metal has Si, Mn, and Cr contents that are adjusted as described below to achieve excellent quality of the electric resistance weld.

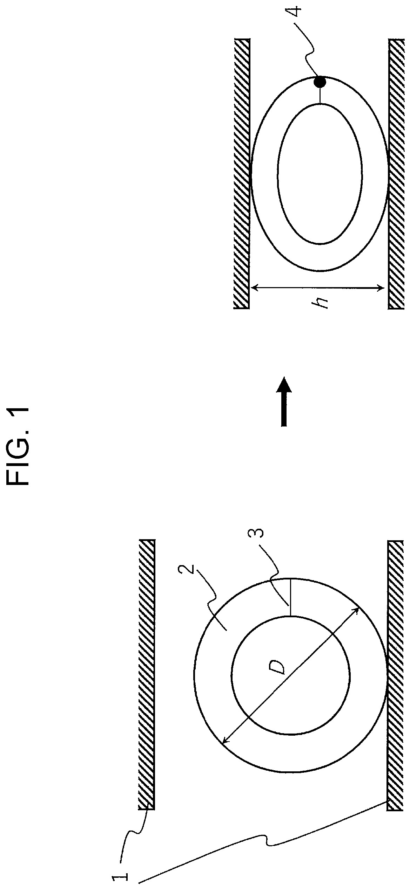

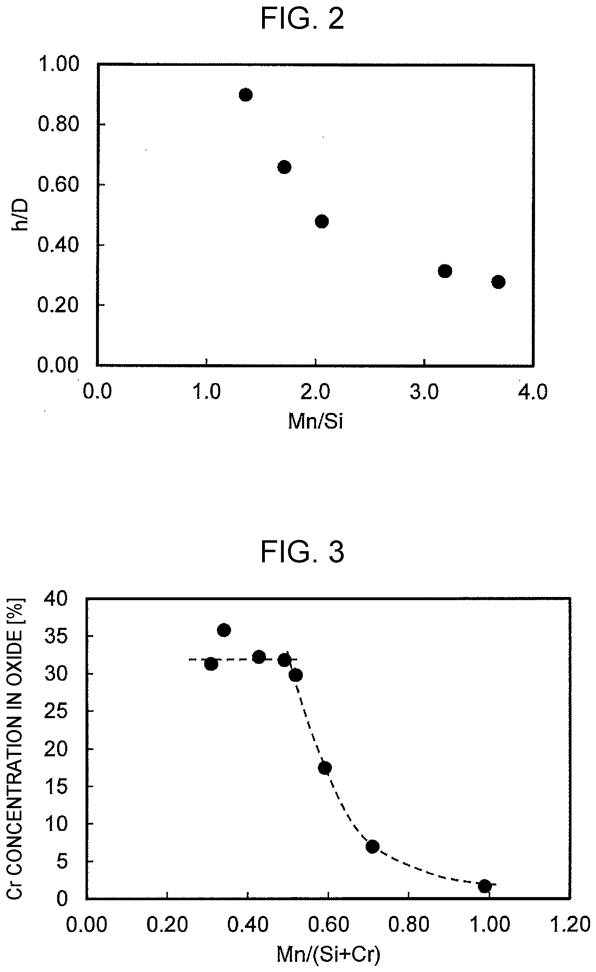

In the present invention, an adjustment is made to achieve a Mn/(Si+Cr) of 0.52 or greater and 0.85 or less, where the contents of the Si, Mn, and Cr are within the above-described ranges. The inventors made the adjustment to various base metals and subjected them to an experiment of electric resistance welding. A flattening test was performed on each of the obtained electric resistance welded steel pipes in accordance with JIS G 3478:2015, to evaluate a flattening property of the weld of the electric resistance welded steel pipe (also referred to as the "electric resistance weld"). Fig. 1 is a diagram illustrating how the flattening test was performed. The flattening test is a test performed as follows. Two flat plates 1 are placed on upper and lower surfaces of an electric resistance welded steel pipe in a direction parallel to an axial direction of the electric resistance welded steel pipe. The distance between the two flat plates 1 is decreased to flatten the electric resistance welded steel pipe, 2, and the distance between the flat plates at which an initial crack is observed in the electric resistance weld, 3, during the flattening test is designated as a flattening crack height h. The expression "an initial crack 4 is observed in the electric resistance weld 3" refers to a case where a crack is visually observed on an outer surface of the electric resistance weld 3 parallel to the axial direction of the electric resistance welded steel pipe 2. Consequently, as illustrated as an example in Fig. 2, it was found that in the case where the Cr content of the base metal was constant at 1%, the flattening crack height h increased and decreased depending on the Mn/Si ratio, which indicated that there are upper and lower limits of a permissible Mn/Si ratio for the flattening crack height h that is desired. This result indicates that when the Cr content is constant, the fluidity of the oxide that is discharged together with the molten steel during electric resistance welding can be controlled by the composition ratio between Mn and Si and that there are conditions of the component ratio under which the oxide is less likely to remain in the electric resistance weld 3. Next, electric resistance welded steel pipes were obtained by performing electric resistance welding on base metals having Cr contents ranging from 0.90 to 1.20%, and their flattening property was similarly evaluated. As a result, it was found that there are upper and lower limits of a permissible Mn/(Si+Cr) for the flattening crack height h that is desired.

In the case where the present electric resistance welded steel pipe is used in a mechanical structure such as a rotational body, the electric resistance weld is required to have a flattening property for the safety of the weld; specifically, a ratio h/D of 0.5 or less is required, where h is the flattening crack height at the time a crack begins to form in the weld during the flattening test, and D is an outside diameter of the steel pipe. Achieving this required property requires that the Mn/(Si+Cr) be 0.52 or greater. As the Mn/(Si+Cr) decreases, the Cr concentration in the oxide increases, thus, the melting point of the oxide exceeds the melting point of the base metal, and, consequently, the oxide tends to remain in the weld. Since the oxide remaining in the weld causes weld cracking, it is desirable that the amount of the oxide be reduced. An SEM-EDX analysis performed on the oxide revealed that when the concentration (Cr concentration in the oxide) is greater than 30%, the oxide tends to remain in the weld. The relationship between the Mn/(Si+Cr) and the Cr concentration in the oxide at that time is shown in Fig. 3. When the Cr concentration in the oxide was greater than 30%, the Mn/(Si+Cr) was less than 0.52. Accordingly, the Mn/(Si+Cr) is to be 0.52 or greater. The Mn/(Si+Cr) is preferably 0.54 or greater and more preferably 0.56 or greater. The Mn/(Si+Cr) is even more preferably 0.58 or greater and most preferably 0.60 or greater. The Mn/(Si+Cr) is even most preferably 0.64 or greater. On the other hand, if the Mn/(Si+Cr) ratio is greater than 0.85, the Mn concentration in the oxide is increased, thus, the melting point of the oxide exceeds the melting point of the base metal, and, consequently, because of the oxide remaining in the weld, the h/D exceeds 0.5. Accordingly, the Mn/(Si+Cr) is to be 0.85 or less. The Mn/(Si+Cr) is preferably 0.82 or less and more preferably 0.78 or less. The Mn/(Si+Cr) is even more preferably 0.70 or less and most preferably 0.68 or less.

In the flattening test of the electric resistance welded steel pipe, inequality (1), shown below, is to be satisfied.

$$h/D \leq 0.5 \qquad (1)$$

In the inequality, h is the flattening crack height (mm) at which an initial crack is observed in the electric resistance weld, and D is the outside diameter (mm) of the steel pipe.

As described above, in the case of applications in a mechanical structure such as a rotational body, it is necessary to satisfy inequality (1), shown above, to achieve a strength and inhibit a fracture of the weld. While the lower limit is not particularly limited, the smaller the value, the better. Accordingly, the steel pipe (pipe) may be in a state of being completely flattened by the flat plate portions without exhibiting cracks. The expression "without exhibiting cracks" means a state of 2t/D (t is a thickness of the base metal).

In Base Metal of Electric Resistance Welded Steel Pipe, Hardness at Position 0.2 mm ± 0.05 mm From Outer Surface of Steel Pipe in Wall Thickness Direction and Hardness at Position 0.2 mm ± 0.05 mm From Inner Surface of Steel Pipe in Wall Thickness Direction are Each 300 HV or Greater (preferred condition)

In the base metal of the electric resistance welded steel pipe, it is preferable that a hardness at a position 0.2 mm ± 0.05 mm from an outer surface of the steel pipe in a wall thickness direction and a hardness at a position 0.2 mm ± 0.05 mm from an inner surface of the steel pipe in the wall thickness direction be each 300 HV or greater so that wear resistance can be ensured. More preferably, the hardnesses are each 340 HV or greater. The hardnesses are even more preferably each 380 HV or greater and most preferably 420 HV or greater. While the upper limit is not particularly limited, the hardnesses are preferably each 550 HV or less. More preferably, the hardnesses are each 520 HV or less.

In Base Metal of Electric Resistance Welded Steel Pipe, Difference Between Hardness at Position 0.2 mm ± 0.05 mm From Outer Surface of Steel Pipe in Wall Thickness Direction and Hardness at Position 0.2 mm ± 0.05 mm From Inner Surface of Steel Pipe in Wall Thickness Direction is 100 HV or Less (preferred condition)

In the base metal of the electric resistance welded steel pipe, fatigue resistance can be improved by reducing deviations in the hardnesses of the inner and outer surfaces of the steel pipe and achieving sufficient hardness on the inner surface side, because, in the case of applications in a mechanical structure such as a rotational body, torsional fatigue originates mainly from the inner surface side of the steel pipe. In terms of producing this effect, it is preferable that, in the base metal of the steel pipe, the difference between the hardness at the position 0.2 mm ± 0.05 mm from the outer surface of the steel pipe in the wall thickness direction and the hardness at the position 0.2 mm ± 0.05 mm from the inner surface of the steel pipe in the wall thickness direction be 100 HV or less. The difference in hardness is more preferably 80 HV or less. The difference in hardness is even more preferably 60 HV or less. While the lower limit is not particularly limited, the difference in hardness is preferably 10 HV or greater. The difference in hardness is more preferably 30 HV or greater.

In C Cross Section of Electric Resistance Welded Steel Pipe, Difference Between Maximum Wall Thickness and Minimum Wall Thickness of Steel Pipe is 10% or Less of Average Wall Thickness (preferred condition)

In a C cross section of the electric resistance welded steel pipe, if the difference between a maximum wall thickness and a minimum wall thickness of the steel pipe is greater than 10% of an average wall thickness of the steel pipe, the steel pipe may significantly vibrate when the steel pipe is used as a rotational body, and, consequently, it may become difficult to use the steel pipe as a mechanical structure. Accordingly, it is preferable that the difference between the maximum wall thickness and the minimum wall thickness of the steel pipe be 10% or less of the average wall thickness of the steel pipe. The difference is more preferably 8% or less. The difference is even more preferably 6% or less and most preferably 3% or less. The C cross section is a plane parallel to a circumferential direction and the wall thickness direction of the steel pipe. The C cross section may be an arbitrary C cross section. While the lower limit is not particularly limited, the difference is preferably 1% or greater. The difference in the wall thickness is determined from measurements including that of the weld.

In addition to doing what has been described above, reducing the difference between the hardness of the base metal of the electric resistance welded steel pipe and the hardness of the electric resistance weld is preferable, because, in this case, stress concentration in the base metal of the electric resistance welded steel pipe or its electric resistance weld, whichever has a lower hardness, does not occur during the use of the steel pipe in a mechanical structure, and, consequently, fractures are inhibited. When the difference in hardness is less than 20 HV, a problem that may be encountered is that a tempering process for the weld, which is a hardened structure, may take a long time if the weld is in an as-welded state. Accordingly, the difference between the hardness of the base metal of the electric resistance welded steel pipe and the hardness of the electric resistance weld is preferably 20 HV or greater and more preferably 40 HV or greater. The difference between the hardness of the base metal of the electric resistance welded steel pipe and the hardness of the electric resistance weld is even more preferably 60 HV or greater and most preferably 80 HV or greater. When the difference in hardness is greater than 250 HV, a fracture is likely to occur on the base metal side, which has a lower hardness. Accordingly, the difference between the hardness of the base metal of the electric resistance welded steel pipe and the hardness of the electric resistance weld is preferably 250 HV or less and more preferably 150 HV or less. The difference between the hardness of the base metal of the electric resistance welded steel pipe and the hardness of the electric resistance weld is even more preferably 120 HV or less and most preferably 100 HV or less. The hardness of the base metal of the electric resistance welded steel pipe is, as described above, the hardness at a position 0.2 mm $\pm$ 0.05 mm from the outer surface of the steel pipe in the wall thickness direction and the hardness at a position 0.2 mm $\pm$ 0.05 mm from the inner surface of the steel pipe in the wall thickness direction, in the base metal of the electric resistance welded steel pipe. The hardness of the electric resistance weld is an average of hardnesses at three points within 0.3 mm $\pm$ 0.05 mm from a widthwise middle position of the weld metal in a width direction, where the three points are at a position 0.2 mm $\pm$ 0.05 mm from the outer surface of the steel pipe in the wall thickness direction, at a wall-thickness-wise middle position of the steel pipe, and at a position 0.2 mm $\pm$ 0.05 mm from the inner surface of the steel pipe in the wall thickness direction. As used herein, the term "weld metal" refers to the metal in the electric resistance welded steel pipe that melts during welding and subsequently solidifies. The weld metal is defined as a region having a microstructural morphology different from that of the heat-affected zone, which surrounds the weld metal, as determined by performing etching on a region in a cross section perpendicular to a pipe longitudinal direction of the electric resistance welded steel pipe that definitely includes the weld with an appropriate method.

Now, a method for manufacturing the above-described electric resistance welded steel pipe of the present invention will be described. The method for manufacturing the electric resistance welded steel pipe of the present invention includes roll-forming a material steel sheet and subsequently electric-resistance-welding the roll-formed steel sheet to produce a material steel pipe. The material steel sheet may be a hot rolled steel sheet (which may be a hot rolled steel strip) or a cold rolled steel sheet, and the method of roll forming for producing the material steel pipe from the steel sheet is not particularly specified. Heat treatment may be performed on the weld by highfrequency heating and forced cooling, to modify the microstructures of the electric resistance weld after electric resistance welding.

Heating

Subsequently, the material steel pipe is heated at a heating rate of 120°C/s or less and at a heating temperature of 850°C or greater and 1200°C or less, and then, the steel pipe is subjected to a diameter reduction rolling. In this manner, the electric resistance welded steel pipe of the present invention is produced. As used herein, the term "temperature" refers to the temperature of, for example, the outer surface of the pipe, and the temperature is measured by using a radiation thermometer or the like, which is merely illustrative. If the heating rate is greater than 120°C/s, it is difficult to control the temperature, and, consequently, the target heating temperature cannot be achieved. Accordingly, the heating rate is 120°C/s or less. The heating rate is preferably 100°C/s or less. On the other hand, if the heating rate is less than 20°C/s, the time during which the material steel pipe is exposed to air at a high temperature increases, which causes a decarburized layer on the surface of the material steel pipe to penetrate into an inner portion, and, consequently, the hardness of the surface decreases. Accordingly, the heating rate is preferably 20°C/s or greater so that a predetermined surface hardness can be achieved. The heating rate is an average heating rate over a range of 50 to 850°C.

If the heating temperature is less than 850°C, sufficient quenching is not achieved in a subsequent cooling process, and, consequently, the hardness of the surface of the electric resistance welded steel pipe is reduced. Accordingly, the heating temperature needs to be 850°C or greater. The heating temperature is preferably 900°C or greater. On the other hand, if the heating temperature is greater than 1200°C, coarse grains are formed, which degrades the toughness of the steel pipe and, therefore, increases the likelihood of a fracture. Accordingly, the heating temperature needs to be 1200°C or less. In particular, if the heating temperature is greater than 1100°C, high-temperature deformation in the wall thickness direction, specifically, an increase and decrease in wall thickness, that occurs during the diameter reduction rolling becomes significant, and, consequently, deviations in the maximum wall thickness and the minimum wall thickness in a C cross section of the final electric resistance welded pipe increase; the diameter reduction rolling is one that is performed at a diameter reduction ratio of 25 to 75%, which is a ratio denoted as (D1 - D2)/D1 where D1 is the outside diameter of the material steel pipe, and D2 is the outside diameter of the electric resistance welded steel pipe. The C cross section is a plane parallel to a circumferential direction and the wall thickness direction of the steel pipe, as illustrated in Fig. 1. In an electric resistance welded steel pipe for use in a rotational body, it is desirable, from the standpoint of reducing whirling during rotation, that, in at least one C cross section of the steel pipe, the difference between the maximum wall thickness and the minimum wall thickness of the steel pipe be 10% or less of an average wall thickness of the steel pipe, in other words, that the value (deviation in wall thickness) obtained by dividing the difference between the maximum wall thickness and the minimum wall thickness of the steel pipe by the average wall thickness of the steel pipe be 10% or less. If the heating temperature is greater than 1100°C, the difference between the maximum wall thickness and the minimum wall thickness of the steel pipe exceeds 10% of the average wall thickness of the steel pipe. Accordingly, it is preferable that the heating temperature be 1100°C or less.

Diameter Reduction Rolling

After the heating, a diameter reduction rolling is performed. If the diameter reduction ratio is less than 25%, the increase in the average wall thickness of the electric resistance welded steel pipe is small, and thus, a stiffness of the steel pipe, which has a relationship with a ratio between the average wall thickness and the outside diameter, is reduced; therefore, such a steel pipe is unsuitable for a mechanical structure that is subjected to a large load, such as a rotational body. Accordingly, the diameter reduction ratio is preferably 25% or greater. The diameter reduction ratio is more preferably 30% or greater and even more preferably 35% or greater. The diameter reduction ratio is most preferably 38% or greater. On the other hand, if the diameter reduction ratio is greater than 75%, the difference between the maximum wall thickness and the minimum wall thickness of the electric resistance welded steel pipe exceeds 10% of the average wall thickness of the steel pipe, in at least one C cross section of the steel pipe. Accordingly, the diameter reduction ratio is preferably 75% or less. The diameter reduction ratio is more preferably 65% or less and even more preferably 60% or less. The diameter reduction ratio is most preferably 56% or less.

Furthermore, after the diameter reduction rolling, it is preferable that the inner and outer surfaces of the electric resistance welded steel pipe be cooled at an average cooling rate of 3°C/s or greater. In this case, the method of cooling may be natural cooling or forced cooling. If the average cooling rate is less than 3°C/s, regions near the inner and outer surfaces of the pipe are not sufficiently quenched, which makes it impossible to achieve sufficient hardness. Accordingly, it is preferable that the inner and outer surfaces of the electric resistance welded steel pipe be cooled at an average cooling rate of 3°C/s or greater. As used herein, the term "average cooling rate" refers to an average cooling rate during a time after the diameter reduction rolling is completed and until the surface temperature reaches 200°C, and the measurement is performed with a radiation thermometer, a contact-type thermometer, or the like, which is merely illustrative. As used herein, the expression "sufficient hardness" refers to cases where a steel pipe for use in a rotational body has a hardness of regions near its inner and outer surfaces of 300 HV or greater so that the steel pipe can have wear resistance against a bearing.

Using this manufacturing method enables the production of an electric resistance welded steel pipe in which the difference in hardness between the inner and outer surfaces of the electric resistance welded steel pipe is small and which has excellent weld quality. The method may additionally include performing a heat treatment on the electric resistance welded steel pipe and performing a surface treatment, such as carburizing and quenching, to improve the hardness of the surface of the pipe.

EXAMPLES

Hot rolled steel strips with a thickness of 6.0 mm, which had the compositions shown in Table 1, were sequentially subjected to roll forming to form cylindrical open pipes. A pipe production process was performed in which an end of the open pipes was electric-resistance-welded to another end thereof, to form steel pipes having an outside diameter of φ 89.1 mm. These steel pipes were used as material steel pipes (mother pipes).

The material steel pipes were subjected to diameter reduction rollings under the conditions shown in Table 2 to form electric resistance welded steel pipes (steel pipes) that served as final products. A steel pipe sample with a length of 100 mm was cut from each of the resulting electric resistance welded steel pipes that served as final products. A flattening test was performed in accordance with JIS G 3478:2015, to evaluate the flattening property of the weld of each of the electric resistance welded steel pipes (the ratio h/D, where h was the flattening crack height at which an initial crack was observed in the weld during the flattening test, and D was the outside diameter of the steel pipe).

Furthermore, a Vickers hardness test was performed in accordance with JIS Z 2244-1:2020 with a test force of 1 N, to evaluate the hardness at a position 0.2 mm $\pm$ 0.05 mm from the outer surface of the steel pipe in the wall thickness direction and the hardness at a position 0.2 mm $\pm$ 0.05 mm from the inner surface in the wall thickness direction. This hardness test was performed as follows. In an arbitrary C cross section of the steel pipe, measurements were taken every 30 degrees in the circumferential direction. Among the measurements, the maximum hardness of the outer surface of the steel pipe and the minimum hardness of the inner surface of the steel pipe were determined, and the difference between them was evaluated as the difference in hardness.

For the hardness of the weld, the Vickers hardness test was also performed in accordance with JIS Z 2244-1:2020 with a test force of 1 N. Specifically, nital etching was performed to reveal the weld metal, then, hardnesses were measured at three points, and an average of the hardnesses was calculated; the three points were within 0.3 mm $\pm$ 0.05 mm from a widthwise middle position of the weld metal in a width direction, where the three points were at a position 0.2 mm $\pm$ 0.05 mm from the outer surface of the steel pipe in the wall thickness direction, at a wall-thickness-wise middle position of the steel pipe, and at a position 0.2 mm $\pm$ 0.05 mm from the inner surface of the steel pipe in the wall thickness direction.

Next, similarly, in an arbitrary C cross section of the steel pipe, measurements of the wall thickness of the steel pipe were taken every 30 degrees in the circumferential direction with a micrometer. The average wall thickness of the steel pipe was determined as an average of the measurements, and a ratio (tmax - tmin)/tm of the difference between the maximum wall thickness, tmax, and the minimum wall thickness, tmin, among the measurements, to the average wall thickness, tm, was calculated. In steel pipes Nos. 1 to 4, 6 to 9, 11, 12, and 14 to 20, the difference between the hardness of the base metal of the electric resistance welded steel pipe and the hardness of the telegram weld was 20 HV or greater and 250 HV or less. The results of the evaluations are shown together in Table 2.

[Table 1]

| Steel Grade | Chemical Composition (mass%) | | | | | | | | | | | | | | | | Classification |
|---|---|---|---|---|---|---|---|---|---|---|---|---|---|---|---|---|---|
| | C | Si | Mn | Al | P | S | Cr | Mo | Ni | Cu | Ti | Nb | V | B | Ca | Mn/(Si+Cr) | |
| A | 0.34 | 0.20 | 0.67 | 0.041 | 0.012 | 0.003 | 0.92 | 0.16 | 0.05 | 0.02 | 0.018 | 0.003 | 0.002 | 0.0006 | 0.0004 | 0.60 | Conforming Steel |
| B | 0.29 | 0.23 | 0.80 | 0.038 | 0.011 | 0.011 | 1.19 | 0.24 | 0.08 | 0.16 | 0.022 | 0.002 | 0.004 | 0.0002 | 0.0003 | 0.56 | Conforming Steel |
| C | 0.16 | 0.16 | 0.89 | 0.035 | 0.013 | 0.005 | 0.91 | 0.28 | 0.15 | 0.07 | 0.016 | 0.004 | 0.002 | 0.0003 | 0.0003 | 0.83 | Conforming Steel |
| D | 0.26 | 0.18 | 0.62 | 0.033 | 0.009 | 0.006 | 1.01 | 0.22 | 0.07 | 0.06 | 0.038 | 0.001 | 0.002 | 0.0004 | 0.0008 | 0.52 | Conforming Steel |
| E | 0.44 | 0.25 | 0.78 | 0.029 | 0.015 | 0.009 | 1.04 | 0.16 | 0.06 | 0.32 | 0.011 | 0.002 | 0.003 | 0.0001 | 0.0001 | 0.60 | Conforming Steel |
| F | 0.28 | 0.15 | 0.92 | 0.025 | 0.014 | 0.008 | 0.91 | 0.23 | 0.12 | 0.01 | 0.023 | 0.003 | 0.002 | 0.0003 | 0.0003 | 0.87 | Comparative Steel |
| G | 0.32 | 0.33 | 0.61 | 0.022 | 0.012 | 0.009 | 0.89 | 0.29 | 0.13 | 0.05 | 0.018 | 0.003 | 0.001 | 0.0001 | 0.0002 | 0.50 | Comparative Steel |
| H | 0.35 | 0.15 | 0.90 | 0.031 | 0.011 | 0.008 | 0.90 | 0.11 | 0.17 | 0.13 | 0.019 | 0.002 | 0.002 | 0.0003 | 0.0002 | 0.86 | Comparative Steel |
| I | 0.31 | 0.34 | 0.63 | 0.027 | 0.013 | 0.009 | 0.93 | 0.16 | 0.07 | 0.08 | 0.022 | 0.003 | 0.003 | 0.0004 | 0.0008 | 0.50 | Comparative Steel |
| J | 0.29 | 0.18 | 0.62 | 0.024 | 0.018 | 0.007 | 1.11 | 0.27 | 0.10 | 0.06 | 0.031 | 0.002 | 0.002 | 0.0004 | 0.0002 | 0.48 | Comparative Steel |
| K | 0.33 | 0.22 | 0.86 | 0.025 | 0.016 | 0.007 | 0.98 | 0.30 | 0.11 | - | - | - | - | - | - | 0.72 | Conforming Steel |
| L | 0.31 | 0.28 | 0.72 | 0.021 | 0.011 | 0.004 | 0.92 | 0.24 | 0.09 | 0.21 | - | - | - | - | - | 0.60 | Conforming Steel |
| M | 0.28 | 0.19 | 0.84 | 0.034 | 0.014 | 0.005 | 1.02 | 0.29 | 0.15 | - | - | 0.004 | 0.002 | - | - | 0.69 | Conforming Steel |

The components of the chemical composition other than the above are balance Fe and unavoidable impurities.
The underline means "being outside the scope of the present invention".

[Table 2]

| Steel Pipe No. | Steel Grade | Conditions for Hot Diameter Reduction Rolling | | | | | Hardness of Outer Surface (HV) | Hardness of Inner Surface (HV) | Difference in Hardness Between Inner and Outer Surfaces (HV) | Hardness of Weld (HV) | Hardness of Weld - Hardness of Outer Surface (HV) | Hardness of Weld - Hardness of Inner Surface (HV) | Maximum Wall Thickness tmax (mm) | Minimum Wall Thickness tmin (mm) | Average Wall Thickness tm (mm) | (tmax-tmin)/tm (%) | Notes |
|---|---|---|---|---|---|---|---|---|---|---|---|---|---|---|---|---|---|
| | | Heating Rate (°C/sec) | Heating Temperature (°C) | Diameter Reduction Ratio (%) | Cooling Rate (°C/sec) | h/D | | | | | | | | | | | |
| 1 | A | 60 | 910 | 72 | 15 | 0.31 | 450 | 418 | 32 | 512 | 62 | 94 | 6.20 | 6.14 | 6.16 | 1.0 | Invention Example |
| 2 | A | 80 | 1100 | 72 | 18 | 0.29 | 476 | 423 | 53 | 499 | 23 | 76 | 6.31 | 6.12 | 6.19 | 3.1 | Invention Example |
| 3 | A | 20 | 950 | 72 | 20 | 0.33 | 398 | 347 | 51 | 508 | 110 | 161 | 6.22 | 6.14 | 6.15 | 1.3 | Invention Example |
| 4 | B | 110 | 960 | 75 | 25 | 0.47 | 384 | 355 | 29 | 432 | 48 | 77 | 7.65 | 7.30 | 7.44 | 4.7 | Invention Example |
| 5 | B | 90 | 940 | 75 | 5 | 0.45 | 342 | 319 | 23 | 361 | 19 | 42 | 7.71 | 7.32 | 7.49 | 5.2 | Invention Example |
| 6 | B | 100 | 1080 | 75 | 4 | 0.42 | 365 | 338 | 27 | 385 | 20 | 47 | 7.96 | 7.32 | 7.56 | 8.5 | Invention Example |
| 7 | C | 60 | 1010 | 25 | 30 | 0.25 | 417 | 365 | 52 | 466 | 49 | 101 | 5.94 | 5.61 | 5.71 | 5.8 | Invention Example |
| 8 | D | 100 | 1020 | 58 | 17 | 0.36 | 421 | 398 | 23 | 456 | 35 | 58 | 6.29 | 6.11 | 6.18 | 2.9 | Invention Example |
| 9 | E | 60 | 980 | 72 | 15 | 0.42 | 492 | 471 | 21 | 533 | 41 | 62 | 6.29 | 6.12 | 6.20 | 2.7 | Invention Example |
| 10 | A | 10 | 950 | 72 | 11 | 0.33 | 287 | 266 | 21 | 306 | 19 | 40 | 6.21 | 6.14 | 6.15 | 1.1 | Invention Example |
| 11 | C | 60 | 1120 | 75 | 30 | 0.49 | 561 | 493 | 68 | 581 | 20 | 88 | 8.11 | 7.31 | 7.45 | 10.7 | Invention Example |
| 12 | D | 50 | 1080 | 80 | 26 | 0.48 | 406 | 384 | 22 | 444 | 38 | 60 | 6.79 | 6.11 | 6.41 | 10.6 | Invention Example |
| 13 | E | 80 | 960 | 25 | 2 | 0.45 | 312 | 234 | 78 | 485 | 173 | 251 | 5.84 | 5.52 | 5.68 | 5.6 | Invention Example |

| Steel Pipe No. | Steel Grade | Conditions for Hot Diameter Reduction Rolling | | | | h/D | Hardness of Outer Surface (HV) | Hardness of Inner Surface (HV) | Difference in Hardness Between Inner and Outer Surfaces (HV) | Hardness of Weld (HV) | Hardness of Weld - Hardness of Outer Surface (HV) | Hardness of Weld - Hardness of Inner Surface (HV) | Maximum Wall Thickness tmax (mm) | Minimum Wall Thickness tmin (mm) | Average Wall Thickness tm (mm) | (tmax-tmin)/tm (%) | Notes |
|---|---|---|---|---|---|---|---|---|---|---|---|---|---|---|---|---|---|
| | | Heating Rate (°C/sec) | Heating Temperature (°C) | Diameter Reduction Ratio (%) | Cooling Rate (°C/sec) | | | | | | | | | | | | |
| 14 | F | 60 | 950 | 72 | 23 | 0.56 | 379 | 344 | 35 | 413 | 34 | 69 | 6.28 | 6.13 | 6.17 | 2.4 | Comparative Example |
| 15 | G | 70 | 930 | 58 | 26 | 0.64 | 391 | 284 | 107 | 493 | 102 | 209 | 6.24 | 6.09 | 6.15 | 2.4 | Comparative Example |
| 16 | H | 60 | 970 | 72 | 14 | 0.58 | 421 | 271 | 150 | 489 | 68 | 218 | 6.27 | 6.12 | 6.21 | 2.4 | Comparative Example |
| 17 | I | 50 | 1020 | 75 | 20 | 0.59 | 382 | 352 | 30 | 432 | 50 | 80 | 7.73 | 7.35 | 7.49 | 5.1 | Comparative Example |
| 18 | J | 80 | 950 | 25 | 27 | 0.62 | 401 | 344 | 57 | 472 | 71 | 128 | 5.77 | 5.52 | 5.65 | 4.4 | Comparative Example |
| 19 | K | 90 | 920 | 56 | 20 | 0.42 | 366 | 341 | 25 | 454 | 88 | 113 | 6.30 | 6.22 | 6.25 | 1.3 | Invention Example |
| 20 | K | 110 | 1050 | 72 | 32 | 0.39 | 405 | 356 | 49 | 469 | 64 | 113 | 6.61 | 6.34 | 6.29 | 4.3 | Invention Example |
| 21 | L | 80 | 930 | 72 | 25 | 0.41 | 402 | 364 | 38 | 482 | 80 | 118 | 6.28 | 6.21 | 6.26 | 1.1 | Invention Example |
| 22 | M | 100 | 1010 | 72 | 30 | 0.34 | 391 | 344 | 47 | 445 | 54 | 101 | 6.31 | 6.24 | 6.29 | 1.1 | Invention Example |
| 23 | N | 100 | 1010 | 72 | 30 | 0.34 | 391 | 344 | 47 | 445 | 54 | 101 | 6.31 | 6.24 | 6.29 | 1.1 | Invention Example |

The underlined character means "being outside the scope of the present invention".

The "hardness of outer surface" is a hardness at a position 0.2 mm ± 0.05 mm from an outer surface of the steel pipe in a wall thickness direction.

The "hardness of inner surface" is a hardness at a position 0.2 mm ± 0.05 mm from an inner surface of the steel pipe in the wall thickness direction.

Reference Signs List

1    flat plate
2    electric resistance welded steel pipe
3    electric resistance weld
4    initial crack

**Claims**

1.  An electric resistance welded steel pipe comprising a base metal and an electric resistance weld, the base metal having a chemical composition containing, in mass%,

    C: 0.10 to 0.50%,
    Si: 0.15 to 0.35%,
    Mn: 0.60 to 0.90%,
    Al: 0.001 to 0.1%,
    P: 0.03% or less,
    S: 0.03% or less,
    Cr: 0.90 to 1.20%,
    Mo: 0.15 to 0.30%, and
    Ni: 0.25% or less, with a balance of Fe and unavoidable impurities, wherein:

    the chemical composition has a Mn/(Si+Cr) of 0.52 or greater and 0.85 or less, and
    in a flattening test of the electric resistance welded steel pipe, inequality (1), shown below, is satisfied:

    $$h/D \leq 0.5 \qquad (1)$$

    where h is a flattening crack height (mm), at which an initial crack is observed in the electric resistance weld, and D is an outside diameter (mm) of the steel pipe.

2.  The electric resistance welded steel pipe according to claim 1, wherein the chemical composition further contains, in mass%, one or more selected from

    Cu: 0.5% or less,
    Ti: 0.05% or less,
    Nb: 0.005% or less,
    V: 0.005% or less,
    B: 0.001% or less, and
    Ca: 0.001% or less.

3.  The electric resistance welded steel pipe according to claim 1 or 2, wherein, in the base metal of the electric resistance welded steel pipe, a hardness at a position 0.2 mm ± 0.05 mm from an outer surface of the steel pipe in a wall thickness direction and a hardness at a position 0.2 mm ± 0.05 mm from an inner surface of the steel pipe in the wall thickness direction are each 300 HV or greater, and a difference between the hardness at the position 0.2 mm ± 0.05 mm from the outer surface of the steel pipe in the wall thickness direction and the hardness at the position 0.2 mm ± 0.05 mm from the inner surface of the steel pipe in the wall thickness direction is 100 HV or less.

4.  The electric resistance welded steel pipe according to any one of claims 1 to 3, wherein, in a C cross section of the electric resistance welded steel pipe, a difference between a maximum wall thickness and a minimum wall thickness of the steel pipe is 10% or less of an average wall thickness of the steel pipe, where the C cross section is a plane parallel to a circumferential direction and a wall thickness direction of the steel pipe.

5.  A method for manufacturing the electric resistance welded steel pipe according to any one of claims 1 to 4, the method comprising performing heating at a heating rate of 120°C/s or less and at a heating temperature of 850°C or greater and 1200°C or less and subsequently performing a diameter reduction rolling.

6.   The method for manufacturing the electric resistance welded steel pipe according to claim 5, wherein the heating rate is 20°C/s or greater, and an average cooling rate for cooling performed after the diameter reduction rolling is 3°C/s or greater.

7.   The method for manufacturing the electric resistance welded steel pipe according to claim 5 or 6, wherein the heating temperature is 1100°C or less, and a diameter reduction ratio for the diameter reduction rolling is 25 to 75%.

FIG. 1

## FIG. 2

## FIG. 3

## INTERNATIONAL SEARCH REPORT

| International application No. |
| --- |
| **PCT/JP2024/035528** |

| | |
| --- | --- |
| A. | **CLASSIFICATION OF SUBJECT MATTER** |

*C22C 38/00*(2006.01)i; *C21D 8/10*(2006.01)i; *C22C 38/44*(2006.01)i; *C22C 38/54*(2006.01)i
FI:  C22C38/00 301Z; C22C38/44; C22C38/54; C21D8/10 A

According to International Patent Classification (IPC) or to both national classification and IPC

| | |
| --- | --- |
| B. | **FIELDS SEARCHED** |

Minimum documentation searched (classification system followed by classification symbols)

C22C38/00-38/60

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

| | |
| --- | --- |
| C. | **DOCUMENTS CONSIDERED TO BE RELEVANT** |

| Category* | Citation of document, with indication, where appropriate, of the relevant passages | Relevant to claim No. |
| --- | --- | --- |
| X | JP 2015-62920 A (JFE STEEL CORPORATION) 09 April 2015 (2015-04-09)<br>claims, examples, table 1, D material steel plate in table 3 | 1-7 |
| X | JP 59-38356 A (DAIDO STEEL CO., LTD.) 02 March 1984 (1984-03-02)<br>claims, p. 2, upper left column, lines 2-13, examples, H in table 1 | 1-4 |
| A | JP 2008-208417 A (JFE STEEL CORPORATION) 11 September 2008 (2008-09-11)<br>paragraph [0021] | 1-7 |
| A | JP 2012-18153 A (JFE STEEL CORPORATION) 26 January 2012 (2012-01-26)<br>paragraph [0019] | 1-7 |

☐ Further documents are listed in the continuation of Box C.      ☑ See patent family annex.

| | | | |
| --- | --- | --- | --- |
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
| --- | --- |
| **29 November 2024** | **10 December 2024** |

| Name and mailing address of the ISA/JP | Authorized officer |
| --- | --- |
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (July 2022)

**INTERNATIONAL SEARCH REPORT**
Information on patent family members

International application No.

**PCT/JP2024/035528**

| Patent document cited in search report | | | Publication date (day/month/year) | Patent family member(s) | | | Publication date (day/month/year) |
|---|---|---|---|---|---|---|---|
| JP | 2015-62920 | A | 09 April 2015 | EP | 3018220 | A1 | |
| | | | | claims, examples, table 1, D | | | |
| | | | | material steel plate in table 3 | | | |
| | | | | CN | 105555976 | A | |
| | | | | KR 10-2016-0055193 | | A | |
| | | | | WO | 2015/045373 | A1 | |
| JP | 59-38356 | A | 02 March 1984 | (Family: none) | | | |
| JP | 2008-208417 | A | 11 September 2008 | EP | 2116623 | A1 | |
| | | | | paragraph [0019] | | | |
| | | | | US | 2010/0047609 | A1 | |
| | | | | US | 2013/0098899 | A1 | |
| | | | | CN | 101622368 | A | |
| JP | 2012-18153 | A | 26 January 2012 | (Family: none) | | | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2020230795 A
- JP 2018011862 A
- JP 2006077330 A